# EUROPEAN PATENT APPLICATION

(11) **EP 1 830 075 A1**
(43) Date of publication of application: **05.09.2007**
(21) Application number: 05802915.8
(22) Date of filing: 14.10.2005
(51) Int. Cl.: F16B 7/14, E04H 15/60

(54) **IMPROVED MAST**

(30) Priority: 10.11.2004 ES 200402539 U
(71) Applicant: Membrive Martinez, Francisco, 08224 Terraza (ES)
(72) Inventor: Membrive Martinez, Francisco, 08224 Terraza (ES)
(86) International application number: PCT/ES2005/000548
(87) International publication number: WO 2006/051129

(57) **Abstract**

"Improved Mast" is designed to support elements such as sun umbrellas, beach umbrellas etcetera, in which the upper pole, supporting the umbrella, is inserted into the lower pole. The upper end of this lower pole has a plastic covering with grooves on its perimeter into which a bracket holding a protective piece covering the whole mechanism fits. There is a reduction to its original diameter of the headpiece above the grooves and there is a small cut on one side. There is a small space allowed on the side of this cut into which a hinged curved lever is positioned. On the opposite end from the hinge there is a small v-shaped cut. On one side of the upper end of the pole there is a metal bar which is held in place along the side of the top of the bar by two clips. A hole has been drilled across this pole into which the metal bar can be inserted, converting it into a handle which can be used to twist the pole and assist in screwing it into the ground. The interior of the protective cover has an irregularly shaped piece which has an open spiral containing an area which itself comes into contact with the lever, moving it on its axle towards the inside of the pole. This means that the upper pole is pressured and held in place. This section ends in a point which fits into the v-shaped cut in the lever on the end, which when extracted releases the upper pole. The bottom end of the pole widens into a screw shape.

## Description

### Description of the invention

The object of this invention, as detailed in this report, is to create an improved mast for sun umbrellas and similar objects.

Currently a number of poles for sun umbrellas and suchlike exist, consisting of an empty tube of a certain length, which is placed in a vertical position and serves as the lower base of the sun umbrella. Into this empty tube another pole is placed which supports the sun umbrella itself.

The principal problem associated with this type of pole lies with the mechanism used to hold the upper pole in place. The hole in the lower pole into which the upper part is to fit is frequently mismatched in terms of diameter and if the umbrella itself is of excessive weight then the top part of the whole can cause the upper pole to slip and therefore not maintain the desired height of the umbrella.

The lower pole is pointed at the bottom end so that it can be knocked into the ground. Unfortunately, when the ground is hard, it is frequently very difficult to knock the pole sufficiently deeply into the ground as the poles normally lack a screw form and a means to screw into the surface.

The newly improved mast we are presenting here has a metal bar which is held in place along the side of the top of the bar by two clips. A hole has been drilled across this pole into which the metal bar can be inserted, converting it into a handle which can be used to twist the pole and assist in screwing it into the ground.

The upper end of this lower pole also has a plastic covering with grooves on its perimeter into which a bracket holding a protective piece which covers the whole mechanism fits. Above the grooves the headpiece returns to its original diameter and has a small cut on one side. There is a small space allowed on the side of this cut into which a curved lever is positioned.

This lever hinges on the bolt fixed on the cut previously mentioned and is thus pushed into the empty space corresponding to the variable section of the protective cover which itself moves freely of the whole piece. On the other end, the lever has a small v-shaped cut to aid the release of the upper pole.

In the interior of the protective cover there is an irregularly shaped piece which has an open spiral containing an area which itself comes into contact with the lever, moving it on its axle towards the inside of the pole.

This means that the upper pole is pressured and held in place. This section ends in a point which fits into the v-shaped cut in the lever on the end, which when extracted releases the upper pole.

By a simple twist of the exterior protective cover the upper pole is held in position at the desired height within the base pole. By making a similar twist in the opposite direction, the upper pole is released.

The bottom end of the pole widens into a screw shape in order to facilitate putting it into the ground and also make it more difficult for the pole to be lifted accidentally.

In order to screw the pole into the ground, the metal bar needs to be fitted into the drilled hole at the top of the pole to become a handle for turning the pole to aid the screwing-in process.

This newly perfected system thus resolves the problem of variable sizes of the upper pole and also provides a screw mechanism, complete with handle and specifically designed thread for ease of positioning in the ground.

### Explanation of the figures

In order to further explain the invention, we have provided a series of technical drawings to illustrate the function of the pole. These drawings are simply illustrative and are in no way meant to imply any limitation in the practical possibilities of the invention.

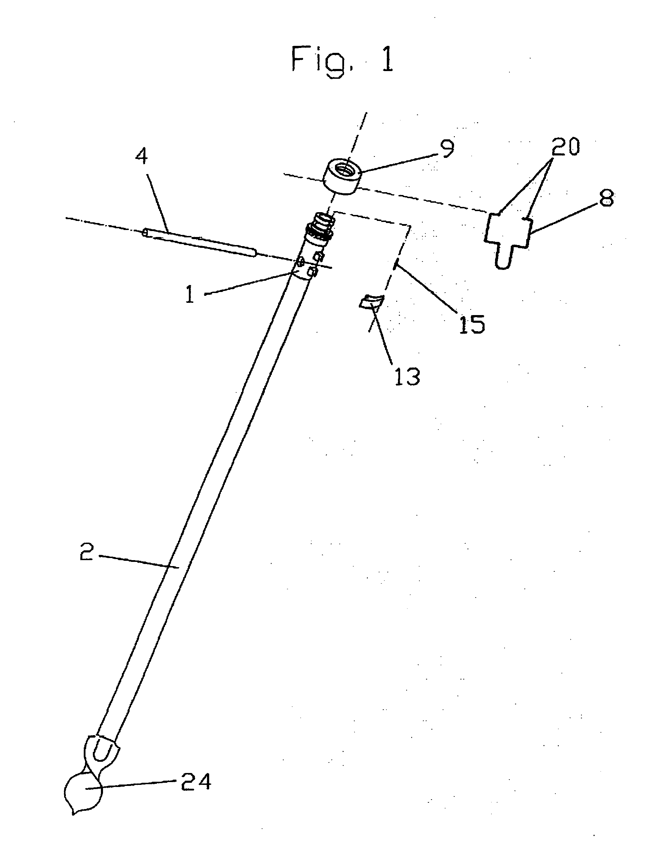

Figure 1 shows all the various pieces of the new pole.

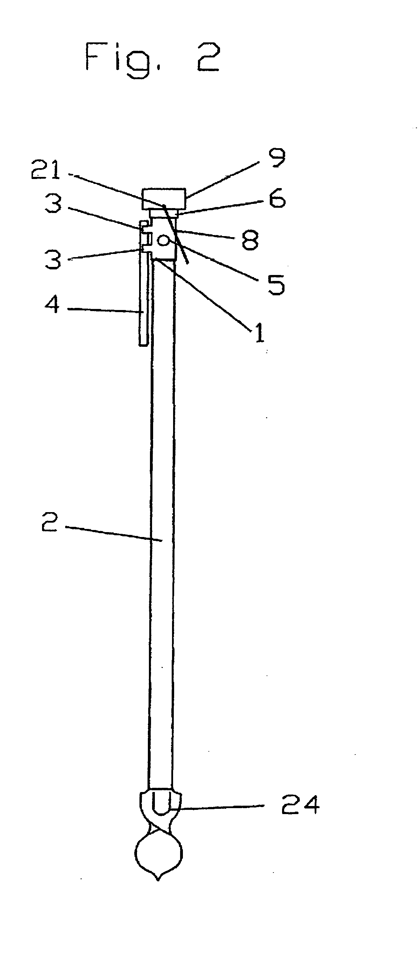

Figure 2 shows the pole in profile

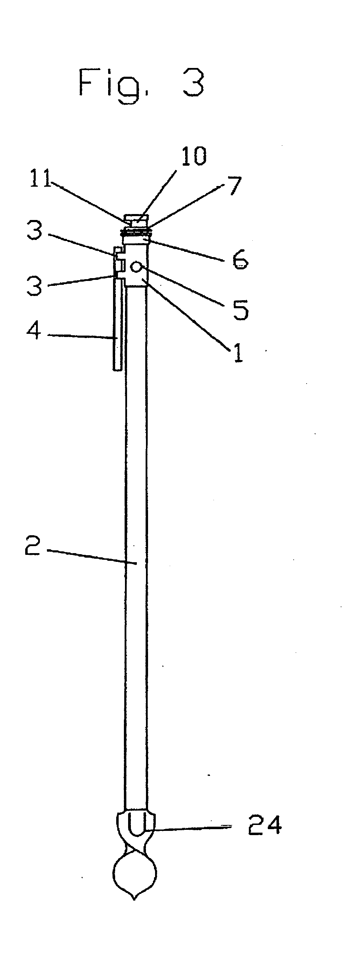

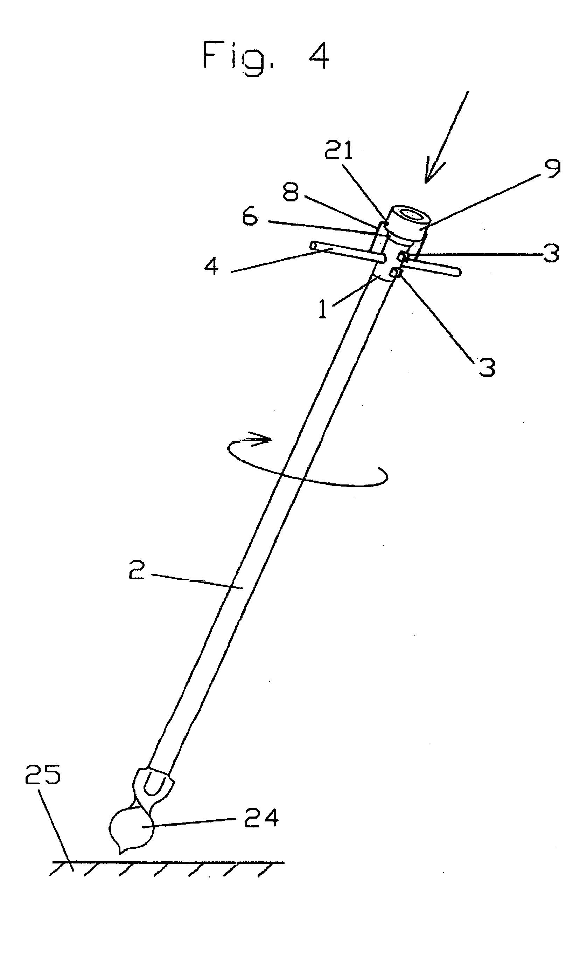

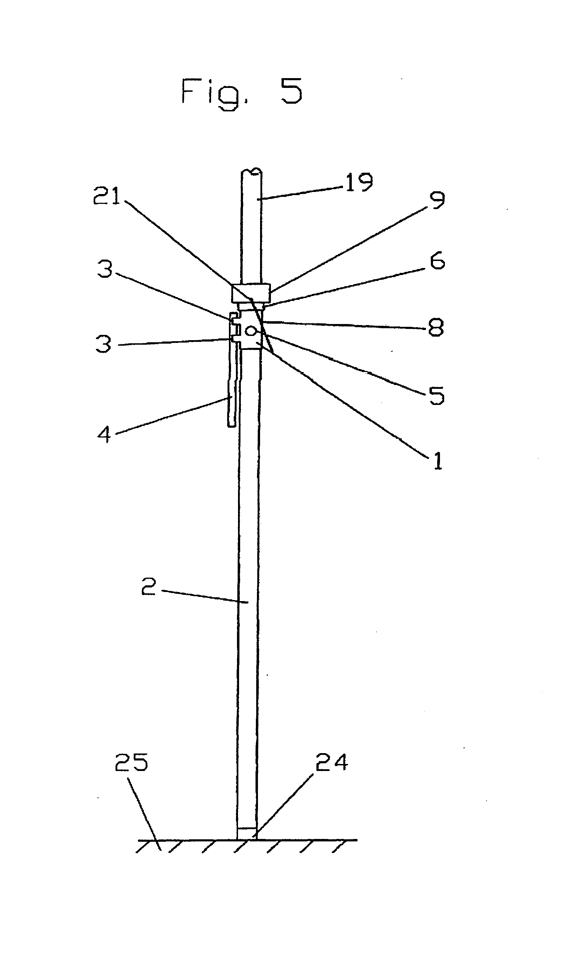

Figure 3 represents the empty headpiece of the tube in profile without the protective covering.

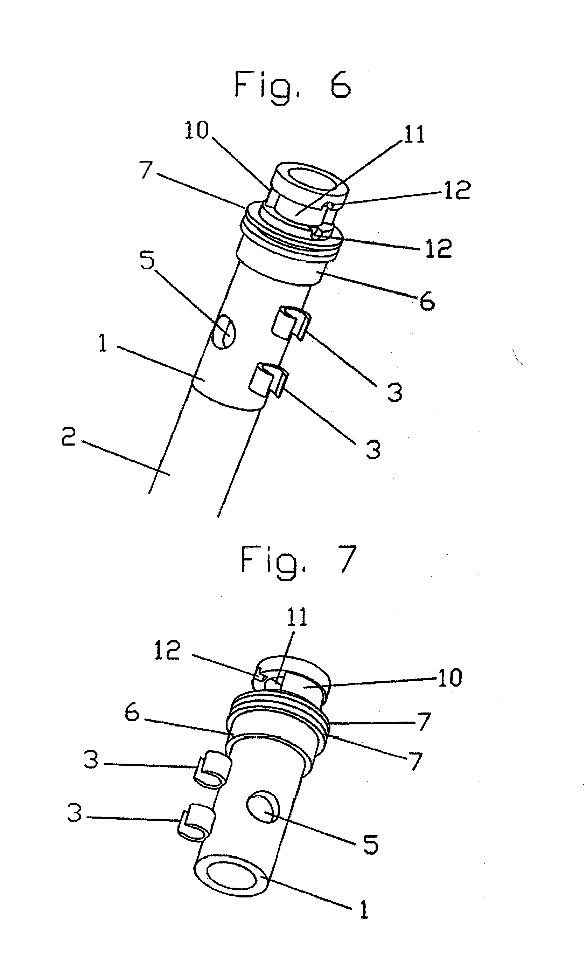

Figure 4 shows the correct procedure for fixing the new pole into the ground.
Figure 5 shows the new lower pole fixed in the ground with the upper support in place.
Figure 6 represents the various pieces of the headpiece of the empty tube in position without the protective covering.
Figure 7 shows the same various pieces of the headpiece as seen from below.

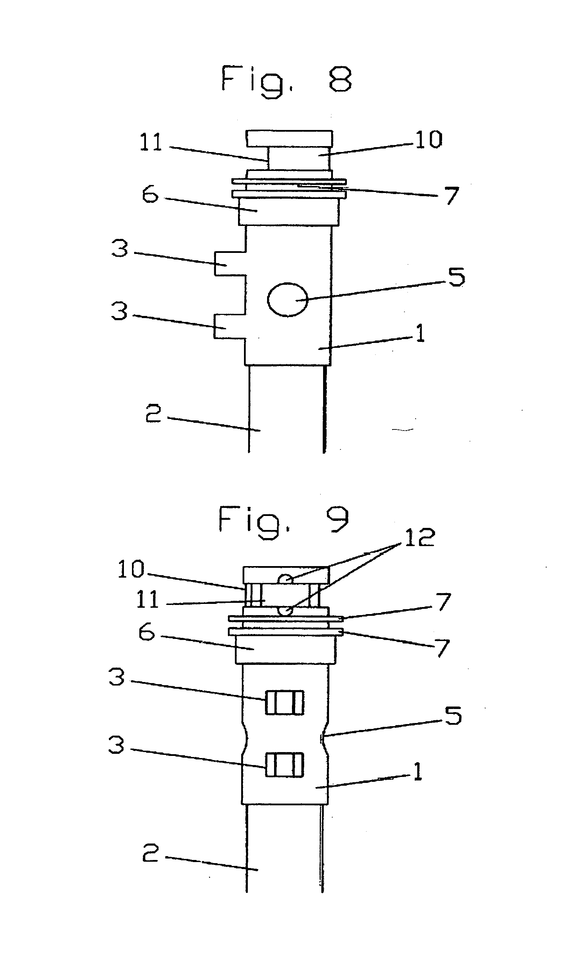

Figure 8 is a detailed profile view of the various pieces of the headpiece without the protective covering.
Figure 9 shows the same pieces from the front.

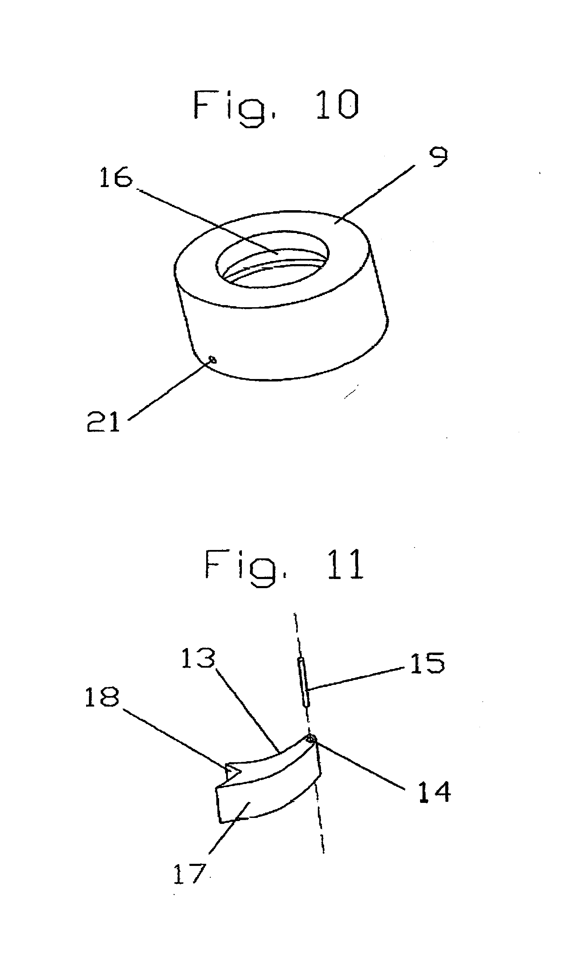

Figure 10 shows the exterior protective covering piece.
Figure 11 details the hinged lever and its angle of movement.

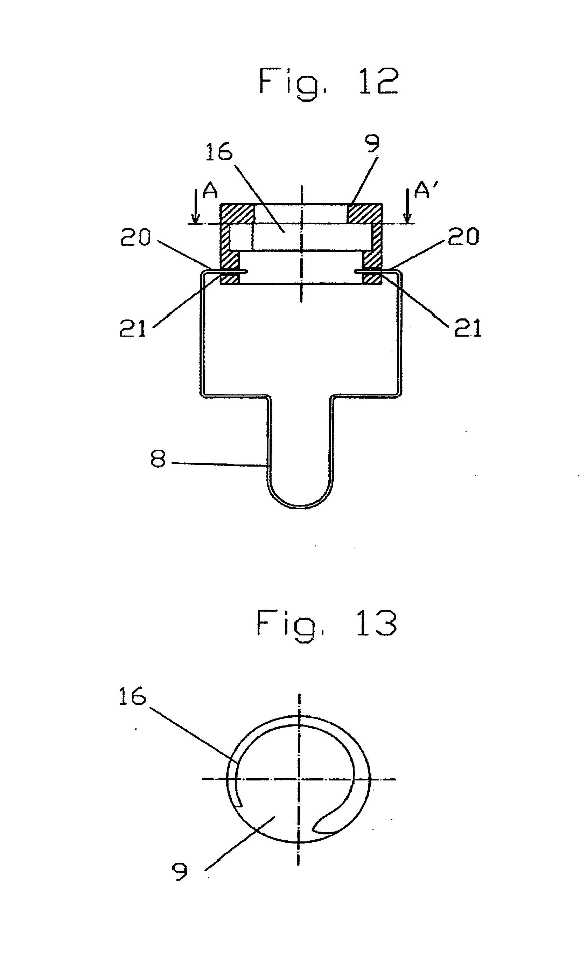

Figure 12 is a frontal section view of the exterior protective covering piece which also shows the relative position of the holding bracket.
Figure 13 shows the same section as viewed from above along the line A-A in figure 12, indicating the interior variable part of the empty protection cover.

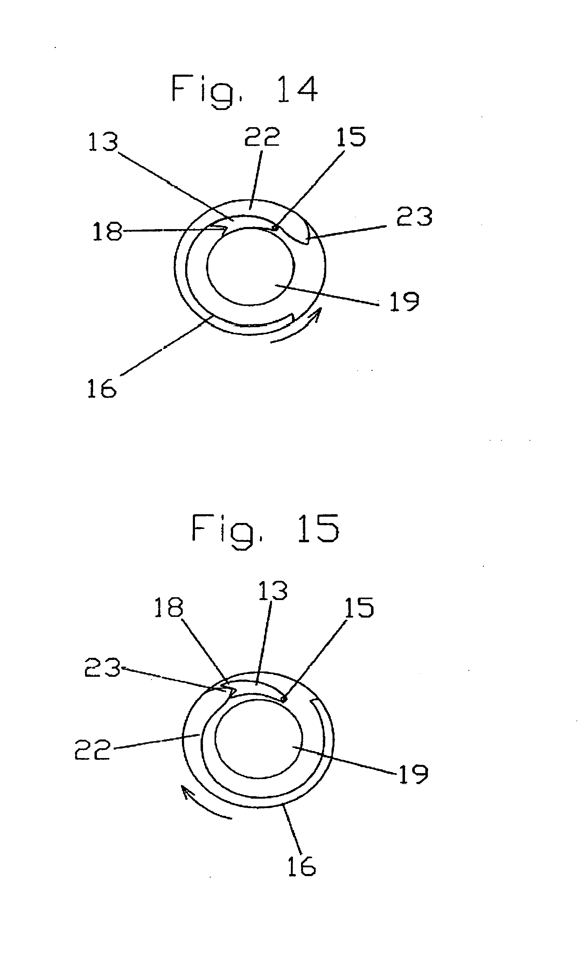

Figure 14 is a section view from above and represents the functioning of the mechanism for holding the upper pole in place, specifically the tooth pivoting on the upper pole as a result of the action of the variable part of the empty protection cover.
Figure 15 is a section view from above and represents the functioning of the mechanism for releasing the upper pole in place, specifically the tooth pivoting away from the upper pole as a result of the action of the variable part of the empty protection cover.

### Practical description of use

The newly improved mast consists of an empty headpiece(1) at the top of the tube (2), which on one side has two clips (3) into which is fitted a metal bar (4). In the top part of this tube (1), a hole has been drilled (5) passing from one side to the other, through which the metal bar above (4) is positioned in order to aid screwing the pole into the ground.

Moving further up, the headpiece(1) widens slightly (6) to present a head with a screw guide (7) which holds a bracket (8) holding and allowing the movement of an empty protecting piece (9)which covers the whole mechanism. Above the guide the headpiece returns to its original diameter (10) and has a small cut on one side (11).

There is a small space allowed on the side of this cut into which a curved lever is positioned. A bolt (15) passes through a hole in the lever (14) which allows it to hinge on itself.

This lever(13) hinges on the bolt (15) fixed on the cut previously mentioned(12) and is thus pushed into the empty space corresponding to the variable section (16) of the protective cover (9) which itself moves freely of the whole piece. On the other end (17), the lever has a small v-shaped cut (18) to aid the release of the upper pole (19).

The protective cover (9) has grooves (21) along the side into which the edges of the bracket (20) fit in order to connect with the guide (7). The bracket (8) not only helps to turn the protective cover (9), but also ensures that it does not separate from the headpiece (1).

In the interior of the protective cover (16) there is an irregularly shaped piece which has an open spiral containing an area which itself comes into contact with the lever, moving it on its axle towards the inside of the pole(22). This means that the upper pole is pressured and held in place. This section ends in a point (23) which fits into the v-shaped cut (18) in the lever (13) on the end, which when extracted releases the upper pole.

By a simple twist of the exterior protective cover (9) the upper pole (19) is held in position at the desired height within the base pole (2). By making a similar twist in the opposite direction, the upper pole is released.

The bottom of the main body of the pole (2) ends in a screw form (24), which is wider than the rest of the pole (2) in order to facilitate the screwing of the pole into the any kind of hard ground (25), whilst at the same time making it difficult for it to be lifted out accidentally.

To screw the pole into the ground, the metal bar (4) should be removed from the clips (3) and introduced into the holes (5) in the headpiece and used as a lever or handle.

## Claims

1. "Improved Mast" is designed to support elements such as sun umbrellas, beach umbrellas etcetera, in which the upper pole, supporting the umbrella, is inserted into the lower pole. The upper end of this lower pole has a plastic covering with grooves on its perimeter into which a bracket holding a protective piece covering the whole mechanism fits.

2. "Improved Mast" as referred to above, is **characterized by** a reduction to its original diameter of the headpiece above the grooves and has a small cut on one side. There is a small space allowed on the side of this cut into which a hinged curved lever is positioned. On the opposite end from the hinge the lever has a small v-shaped cut.

3. "Improved Mast" as referred to above, is **characterized by** the fact that the lever hinges on the bolt fixed on the cut previously mentioned and is thus pushed into the empty space corresponding to the variable section of the protective cover which itself moves freely of the whole piece.

4. "Improved Mast", as referred to above, is **characterized by** the fact that in the interior of the protective cover there is an irregularly shaped piece which has an open spiral containing an area which itself comes into contact with the lever, moving it on its axle towards the inside of the pole. This means that the upper pole is pressured and held in place. This section ends in a point which fits into the v-shaped cut in the lever on the end, which when extracted releases the upper pole.

5. "Improved Mast", as referred to above, is **characterized by** the fact that the protective cover has grooves along the side into which the edges of the bracket fit in order to connect with the guide.

6. "Improved Mast", as referred to above, is **characterized by** the fact that by twisting the protective cover in one direction and pushing the lever into the pole, the upper pole is fixed in position, whilst by twisting in the opposite direction, the hinged lever comes away and the upper pole is released.

7. "Improved Mast", as referred to above, is **characterized by** the fact that the solid headpiece on the upper end of the pole has a metal bar which is held in place along the side of the top of the bar by two clips. A hole has been drilled across this pole into which the metal bar can be inserted, converting it into a handle which can be used to twist the pole and assist in screwing it into the ground.

8. "Improved Mast", as referred to above, is **characterized by** the fact that the bottom end of the pole widens into a screw shape.
